# EUROPÄISCHE PATENTSCHRIFT

(11) **EP 3 032 247 B1**
(45) Veröffentlichungstag und Bekanntmachung des Hinweises auf die Patenterteilung: **23.10.2019**
(21) Anmeldenummer: 15198199.0
(22) Anmeldetag: 07.12.2015
(51) Int. Cl.: G01N 27/407

(54) **GASSENSORELEMENT**
GAS SENSOR ELEMENT
ÉLÉMENT DE CAPTEUR DE GAZ

(30) Priorität: 08.12.2014 DE 102014118153
(43) Veröffentlichungstag der Anmeldung: 15.06.2016
(73) Patentinhaber: Reiter, Werner, 3400 Klosterneuburg (AT); Soukup, Peter Klaus, 3400 (AT)
(72) Erfinder: Reiter, Werner, 3400 Klosterneuburg (AT); Seyr, Peter, 3400 Klosterneuburg (AT)
(74) Vertreter: Glück Kritzenberger Patentanwälte PartGmbB

(56) Entgegenhaltungen:
- EP-A1- 1 775 580
- DE-A1- 4 333 229
- DE-A1- 10 121 889
- DE-A1-102009 055 421
- US-A- 4 510 036

## Beschreibung

### Technisches Gebiet

Die Erfindung bezieht sich auf ein Gassensorelement.

### Stand der Technik

Verfahren und Sensoren zum Messen des Sauerstoffgehalts eines Messgases existieren in unterschiedlichen Ausführungen. Bekannt sind beispielsweise Sauerstoffsensoren, die nach einem diffusionslimitierten amperometrischen Verfahren arbeiten. Diese Sauerstoffsensoren sind aber nur bedingt zur Messung bei hoher Luftfeuchtigkeit geeignet, da Feuchte über konstruktionsbedingte Diffusionsöffnungen in das Innere des jeweiligen Sauerstoffsensors eindringen und dort zu Problemen führen kann.

Bekannt sind weiterhin Sauerstoffsensoren, die nach einem potentiometrischen Verfahren arbeiten. Diese Sensoren werden vorwiegend zur Messung kleiner Sauerstoffkonzentrationen im Bereich der Abgasüberwachung eingesetzt. Durch die Vermeidung von Diffusionsöffnungen sind diese Sensoren robuster auch gegenüber Feuchtigkeit. Zur Bestimmung des Sauerstoffgehaltes wird der Sauerstoffpartialdruck eines Referenzgases mit dem Sauerstoffpartialdruck des Messgases verglichen, und zwar unter Verwendung einer Festkörperelektrolytzelle, welche im einfachsten Fall aus einer ersten Elektrode im Bereich des Referenzgases, aus einer zweiten Elektrode im Bereich des Messgases und einem Sauerstoff leitenden Festkörperelektrolyten zwischen den Elektroden besteht. Die an den Elektroden anliegende Messspannung bestimmt entsprechend der Nernst-Gleichung den Sauerstoffpartialdruckquotienten zwischen dem Referenzgas und dem Messgas. Dieses vereinfachte potentiometrische Messverfahren setzt allerdings voraus, dass der Sauerstoffpartialdruck im Referenzvolumen konstant ist, d.h. die das Referenzgas aufnehmende Referenzkammer muss absolut dicht sein, was in der Praxis nicht oder allenfalls nur mit einem wirtschaftlich nicht vertretbaren Aufwand erreichbar ist.

Daneben ist eine Vielzahl von weiteren Gasmessfühlern auf Basis ionenleitender Festkörperelektrolyte bekannt. ZrO₂-Festkörperelektrolyte zur Leitung von Sauerstoffionen sind ein gängiges Beispiel für solche ionenleitende Festkörperelektrolyte. Um eine ausreichende Ionenleitfähigkeit zur erreichen, werden ZrO₂-Festkörperelektrolyte üblicherweise bei Temperaturen über 400°C betrieben. Das Interface zwischen Festkörperelektrolyt und Gas besteht aus einer Elektrode, an der Gasmoleküle ionisiert werden. Ziel der Elektrode ist die Errichtung einer sogenannten 3-Phasengrenze, bestehend aus Festkörperelektrolyt, Elektrodenmetall und Gas. Von Vorteil ist eine möglichst große aktive Elektrodenoberfläche, d.h. die Elektrode ist üblicherweise porös ausgeführt. Ein bekanntes Problem dieser Systeme ist die Funktionsbeeinträchtigung durch Schadstoffe, insbesondere Schadgase, die den Übergang der Gasmoleküle bzw. Gasionen an der Elektrode behindern.

Ein Beispiel für solche Schadgase sind Silane, also Silizium-Wasserstoff-Verbindungen, die etwa aus Silikondichtungen ausdampfen. An der beheizten Elektrode kommt es durch die Silane zu einer dauerhaften Herabsetzung der Aktivität durch Chemieabsorption der Silizium-Verbindungen direkt an der Elektrode oder durch eine SiO₂-Verglasung der Elektroden-Porenstruktur. Es existiert eine Reihe weiterer Substanzen, die in ähnlicher Weise als Elektrodengift wirken können, wie z.B. Schwefelverbindungen, die bei Gasmessungen in Abgasen ein Problem darstellen. Die durch solche Schadgase verursachten Elektrodenbeeinträchtigungen sind nur teilweise reversibel, sodass sich die Schädigungen aufsummieren und so zu einem vorzeitigen Ausfall des Gasmessfühlers führen können.

Zur Lösung dieser Probleme ist aus dem Stand der Technik eine Reihe von Vorrichtungen bekannt, die zumindest einen teilweisen Schutz vor Schadgasen bieten. Im Prinzip handelt es sich dabei um Filter, die dem Messsystem vorangeschaltet werden. Häufig dienen die Filter auch als Schutz vor Flüssigkeitstropfen oder vor Partikeln, die vom Gasfluss mitgeschleppt werden.

Aus der DE 10 2008 000 463 A1 ist eine Vorrichtung bekannt, an der die dem Abgas zugewandte Seite des Sensors von einem Schutzrohr umgeben ist und zusätzlich durch ein poröses Speichermittel geschützt ist. Das Schutzrohr verfügt über Durchlässe für den Gasaustausch. Ziel der Vorrichtung ist, dass mögliche Schwefel-, Phosphor- oder Siliziumverbindungen im Speichermittel irreversibel gespeichert werden.

Aus der DE 10 2008 041 795 A1 ist eine Vorrichtung bekannt, bei der das Gassensorelement direkt mit einer porösen Schutzschicht überzogen ist, d.h. die Schutzschicht wird auch direkt vom Gassensorelement mitgeheizt.

Typisches Problem dieser bekannten Lösungen ist, dass Filter bzw. Schutzschichten mit ausreichender Schutzwirkung mit der Zeit von selbst verglasen, so dass im Extremfall kein Gasaustausch mehr stattfinden kann. Um die langfristige Filterwirkung zu stabilisieren werden gemäß DE 10 2008 041 795 A1 mehrere Filterschichten aufgetragen, wobei Partikel- und Porengröße der Filterschichten nach außen hin zunehmen. Gemäß DE 10 2010 042 640 A1 wird das mehrstufige Schutzschichtverfahren noch um eine Schicht mit Edelmetallkatalysatorteilchen erweitert.

Aus der EP 1 775 580 A1 ist ein Gassensorelement gemäß Oberbegriff des Anspruchs 1 bekannt.

Trotz dieser aus dem Stand der Technik bekannten Lösungen bleibt der Schutz von Gassensoren vor dem Einfluss von Schadgasen ein zentrales Ziel der Weiterentwicklung von Gassensorelementen.

### Darstellung der Erfindung

Hier setzt die Erfindung an. Es soll ein Gassensorelement zur Verfügung gestellt werden, das aufgrund seiner Bauweise einen verbesserten Schutz vor Schadgasen bietet. Diese Aufgabe wird erfindungsgemäß durch das Gassensorelement gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Unter "Messgas" ist im Sinne der Erfindung das zu messende Gas zu verstehen.

Ein "sauerstoffleitender Festkörperelektrolyt" ist im Sinne der Erfindung ein Elektrolyt, der in einem Pumpbetrieb bei Beaufschlagung mit einem Pumpstrom einen Sauerstofftransport abhängig von einer durch den Pumpstrom erzeugten Ladungsträgermenge erzeugt sowie im Messbetrieb eine dem Sauerstoffpartialdruckquotienten zwischen einem Referenzgas und einem Messgas entsprechende Spannung liefert.

Die vorliegende Erfindung stellt ein Gassensorelement aufweisend eine Festkörperelektrolytzelle mit wenigstens einem Festkörperelektrolytelement und wenigstens zwei an sich gegenüberliegenden Oberflächen des Festkörperelektrolytelementes angeordneten Elektroden, nämlich wenigstens einer Referenzelektrode und wenigstens einer Messelektrode, zur Verfügung. Die wenigstens eine Referenzelektrode ist in einer Referenzkammer angeordnet, wobei zumindest ein Teil einer Wandung der Referenzkammer durch ein ein Keramiksubstrat aufweisendes Heizelement gebildet ist. Die wenigstens eine Messelektrode ist in einer das Messgas enthaltenden Messkammer angeordnet, wobei zumindest ein Teil einer Wandung der Messkammer in Form eines Feinfilters zur Abtrennung von Schadgasen aus dem Messgas ausgebildet ist und die Messkammer ansonsten gasdicht gegen die Umgebung abgeschlossen ist. Das Feinfilter, das Festkörperelektrolytelement und das Keramiksubstrat des Heizelements sind in Form einer Sandwichstruktur übereinander angeordnet und durch Verbindungselemente miteinander verbunden. Das Gassensorelement weist zumindest ein mit zumindest einer Diffusionsöffnung ausgestattetes Grobfilter zur Abtrennung von Schadgasen aus dem Messgas auf, wobei die Diffusionsöffnung einen Durchmesser von mindestens 10 *µ*m aufweist.

Wie bereits beschrieben sind für die Sensorlebensdauer vor allem die nichtreversiblen Ablagerungen an der Elektrode kritisch. Durch das erfindungsgemäß vorgeschaltete Feinfilter wird eine Ablagerung von Schadgasen am Filter anstatt an der Elektrode bewirkt. Das Filter stellt also einerseits sicher, dass ein Großteil des Schadgases am Filter abgelagert wird, andererseits lässt das Filter ausreichende Mengen des Messgases durch, damit die Messfunktion des Gassensors aufrecht erhalten bleibt.

Durch die Anordnung von Feinfilter, Festkörperelektrolytelement und Keramiksubstrat des Heizelements in Form einer Sandwichstruktur kann eine Optimierung der Sensortemperatur erreicht werden, welche einen zusätzlichen Beitrag zur Verbesserung der Filterwirkung liefert. Mit zunehmender Temperatur erhöht sich nämlich die Abscheiderate von Schadgasen. Durch den kompakten Sensoraufbau wird das Feinfilter von der Sensorheizung mit beheizt und weist daher eine ausreichend hohe Temperatur auf, um Schadgase irreversibel in die Filterstruktur einzulagern.

Die durch das vorgeschaltete Feinfilter hervorgerufene Begrenzung des Gasaustausches wirkt sich prinzipiell zwar negativ auf das Ansprechverhalten des Sensors aus. Durch den kompakten Sensoraufbau ergibt sich aber ein nur relativ geringes Gasvolumen zwischen dem Filter und der Sensorelektrode, wodurch der nachteilige Einfluss auf das Ansprechverhalten minimiert werden kann.

Das Feinfilter wirkt auch als thermische Stabilisierung der Festkörperelektrolytzelle und verbessert somit die Stabilität der Messung. Ohne Feinfilter wäre die Messelektrode direkt der Umgebung und somit auch den dort auftretenden Temperaturschwankungen ausgesetzt. Für Messungen bei Raumtemperatur würde sich ohne Filter ein starker Temperaturgradient zwischen Messelektrode und Referenzelektrode ergeben. Durch das Feinfilter kann dieser Temperaturgradient signifikant reduziert werden.

Gemäß einer bevorzugten Ausführungsform ist die wenigstens eine Referenzelektrode in einer mit Referenzgas gefüllten, gegen die Umgebung gasdicht abgeschlossenen Referenzkammer angeordnet. Durch die Anordnung der Referenzelektrode in einer gegen die Umgebung gasdicht abgeschlossenen Referenzkammer wird eine über den gesamten Messvorgang hinweg definierte, konstante Zusammensetzung des die Referenzelektrode umgebenden Gases erreicht, wodurch die Messgenauigkeit im Vergleich zu offenen Systemen deutlich gesteigert wird.

Alternativ ist aber auch ein auf amperometrischer Basis arbeitendes Gassensorelement, bei dem die Referenzelektrode über einen Diffusionskanal mit der Messumgebung in Verbindung steht. In diesem Fall ist also die Referenzkammer nicht gasdicht gegen die Umgebung abgeschlossenen, sondern steht mit dieser in Verbindung. Dazu ist die Wandung der Referenzkammer, die durch das ein Keramiksubstrat aufweisendes Heizelement gebildet ist, zweiteilig ausgebildet, wobei zwischen den beiden Wandungsteilen der angesprochene Diffusionskanal ausgebildet ist.

Bei einem solchen amperometrischen Gassensorelement wird die Festkörperelektrolytzelle mit einer Vorspannung beaufschlagt, sodass ein Sauerstoffionenfluss durch die Zelle erzwungen wird. Die Spannungspolarität wird so gewählt, dass bevorzugt Sauerstoff über die Referenzelektrode in Richtung Messelektrode gepumpt wird. In der Referenzkammer stellt sich bei ausreichend hoher Vorspannung der Festkörperelektrolytzelle eine Sauerstoffkonzentration nahe 0 Vol.-% ein. Auf Grund des Gradienten der Sauerstoffkonzentration zwischen Referenzkammer und Messumgebung kommt es zu einem kontinuierlichen Sauerstoffgasfluss in die Referenzkammer, welcher durch den Diffusionskanal begrenzt wird. Der gemessene Strom durch die elektrolytische Zelle ist proportional zum Sauerstoffgasfluss der wiederum ein Maß für die Sauerstoffkonzentration der Messumgebung ist.

Das amperometrische Messprinzip erfordert einen stetigen Gasfluss durch die Sensorstruktur und führt somit auch zu einem forcierten Nachströmen von Schadgasen. Dieses Messprinzip ist daher eigentlich nicht optimal für Anwendungen mit erhöhter Schadgasbelastung geeignet. Dem gegenüber stehen aber Vorteile des amperometrischen Messprinzips, insbesondere eine bessere Messgenauigkeit und eine geringere Gasdruckabhängigkeit, sodass es für bestimmte Anwendungen auch bei höherer Schadgasbelastung lohnend sein kann, ein amperometrisches Gassensorelement einzusetzen. Die Resistenz gegenüber Schadgasen kann durch einen Feinfilter, bevorzugt einen Feinfilter mit einer Porengröße < 1*µ*m, verbessert werden. Das Feinfilter ist benachbart und oberhalb der mit der Referenzkammer nicht in Kontakt stehende Oberfläche des Keramiksubstrats des Heizelements angeordnet.

Um die Diffusionslimitierung des amperometrischen Messprinzips möglichst wenig zu beeinflussen muss die Gasdurchlässigkeit des Feinfilters wesentlich größer sein als die des Diffusionskanals. Dies ist üblicherweise kein Problem, denn die Gasdurchlässigkeit des Feinfilters ergibt sich durch Integration über die gesamte, zum Gasaustausch beitragende Oberfläche der Filterscheibe, d.h. selbst für eine sehr feine Porenstruktur ist bei ausreichend großer Oberfläche eine hohe Gasdurchlässigkeit des Feinfilters erreichbar.

Bevorzugt handelt es sich bei wenigstens einer Referenzelektrode und/oder wenigstens einer Messelektrode um Platin-Elektroden. Mit Hilfe von Platin-Elektroden wird ein besonders hohe Messgenauigkeit erreicht.

Erfindungsgemäß ist zumindest ein mit zumindest einer Diffusionsöffnung ausgestattetes Grobfilter zur Abtrennung von Schadgasen aus dem Messgas vorgesehen. Gemäß einer besonders bevorzugten Ausführungsform bildet das Grobfilter zusammen mit dem Feinfilter eine ansonsten gasdicht gegen die Umgebung abgeschlossene Vorkammer. In dieser Ausführungsform wirkt das Grobfilter mit dem Feinfilter zusammen, da Schadgase erst nach Durchströmen des Grobfilters auf das Feinfilter treffen und zu diesem Zeitpunkt bereits in einem vorgereinigten Zustand vorliegen.

Ein solcher zweistufiger Filteraufbau aus Grobfilter und Feinfilter weist besondere Vorteile in Fällen auf, in denen mit hohen Schadgasbelastungen gerechnet werden muss. Der zweistufige Filteraufbau führt zwar zu einem langsameren Gasaustausch, allerdings stellt dies - wenn überhaupt - nur ein Problem für Messanwendungen dar, die schnelle Sensoransprechzeiten erfordern. Ein schnelles Ansprechen des Sensors geht nämlich immer einher mit einem schnellen Gasaustausch an der Sensorelektrode, ist damit aber auch mit einem schnellen Nachströmen von Schadgasen verbunden. Insbesondere bei der Gasmessung in größeren Prozesskammern treten oftmals aber nur relativ langsame Änderungen der Gaskonzentrationen auf, weshalb in solchen Fällen ein besonders schnelles Ansprechen des Gassensors nicht erforderlich ist. Das Grobfilter mit Diffusionsöffnung limitiert also die nachströmende Schadgasmenge und dient gleichzeitig als Schadgasfänger. Durch die Vorfilterung über die Diffusionsöffnung wird die Lebensdauer des Feinfilters signifikant erhöht, d.h. das Verstopfen bzw. Verglasen des Feinfilters wird reduziert. Zwischen Grobfilter und Elektrode entsteht ein Gasraumvolumen, das teilweise von der Messumgebung abgetrennt ist. Ändert sich die Gaszusammensetzung der Messumgebung, wird diese Änderung durch die Diffusionsöffnung verzögert an die Elektrode weitergegeben. Das Gasraumvolumen sollte möglichst klein sein, um diese Verzögerung möglichst klein zu halten.

Bevorzugt ist das Grobfilter als dicht gesintertes oder als porös gesintertes Keramiksubstrat, insbesondere aus Yttrium-stabilisiertem ZrO₂, ausgebildet. Erfindungsgemäß weist die Diffusionsöffnung des Grobfilters einen Durchmesser von mindestens 10 *µ*m auf. Ist das Grobfilter aus einer porös gesinterten Keramik gebildet, so ist die Ansprechzeit eines Sensors, der noch keiner Schadgasbelastung ausgesetzt war, deutlich schneller. Mit fortschreitender Schadgasbelastung verschlechtert sich das Ansprechverhalten. Die poröse Oberfläche des Grobfilters an der Messumgebung verglast zunehmend, bis das Grobfilter effektiv einer dichten Keramik mit Diffusionsöffnung entspricht.

Bevorzugt weist die Diffusionsöffnung eine sich in Richtung der Vorkammer konisch verjüngende Form auf, wobei der Durchmesser der Diffusionsöffnung in dem der Vorkammer benachbarten Bereich mindestens 10 *µ*m beträgt.

Gemäß einer weiteren bevorzugten Ausführungsform sind in dem Grobfilter mehrere Diffusionsöffnungen vorgesehen. Anzahl und Durchmesser der Diffusionsöffnungen können an Art und Menge des zu filternden Schadgases angepasst werden.

Bevorzugt ist das Festkörperelektrolytelement aus einen Sauerstoff leitenden Festkörperelektrolyten, insbesondere aus Yttrium-stabilisiertem ZrO₂, gebildet. Insbesondere bevorzugt handelt es sich bei dem Referenzgas um Sauerstoff. Die Messung des Sauerstoffgehalts in einem Messgas ist mit besonders hoher Genauigkeit möglich, wenn ein Sauerstoff leitender Festkörperelektrolyt und Sauerstoff als Referenzgas eingesetzt werden. Besonders bewährt hat sich Yttrium-stabilisiertes ZrO₂ als Festkörperelektrolyt.

Gemäß einer weiteren bevorzugten Ausführungsform ist eine mit der Referenzkammer nicht in Kontakt stehende Oberfläche des Keramiksubstrats des Heizelements mit einer Glasschicht versehen, wobei auf der Glasschicht zumindest eine gedruckte Platin-Heizung angeordnet ist. Insbesondere bevorzugt ist das Keramiksubstrat des Heizelements aus Yttrium-stabilisiertem ZrO₂ gebildet. Mit Hilfe der genannten Ausführungsformen lässt sich eine besonders leistungsfähige, stabile und wenig störungsanfällige Heizung für das Gassensorelement verwirklichen. Insbesondere lassen sich die für Messungen mit einem Gassensorelement gemäß der vorliegenden Erfindung besonders vorteilhaften Sensortemperaturen zwischen 500°C und 600°C realisieren. Grundsätzlich sollte die Sensortemperatur aber möglichst niedrig gewählt werden. Der erfindungsgemäße Gassensor erlaubt ein Absenken der Sensortemperatur auf minimal 500°C.

Bevorzugt beträgt die Temperatur der zu messenden Gasmischung zwischen 20°C und 300°C. Ebenfalls bevorzugt befindet sich die zu messende Gasmischung in einem Prozessraum mit einem Volumen von mindestens 100 l.

Bevorzugt handelt es sich bei dem Feinfilter zur Abtrennung von Schadgasen aus dem Messgas um einen Feinfilter zur Abtrennung von Silanen aus dem Messgas.

Bei den filternden Schadgasen handelt es sich bevorzugt um Silane. Diese Art von Schadgas wird insbesondere durch das Ausheizen von Silikondichtungsmaterial erzeugt. Dabei handelt es sich um einen Prozess, bei dem Silane als unerwünschte Gaskomponenten auftreten. Die dabei auftretenden Konzentrationen an Schadgasen sind deutlich geringer als die Silan-Konzentrationen, die bei Fertigungsprozessen in der Halbleitertechnik entstehen, bei denen Silane in hoher Konzentration gezielt zur SiO₂-Abscheidung eingesetzt werden.

Für die irreversible Abscheidung von Silanen an Oberflächen sind Temperaturen > 300°C notwendig. Bei einer Sensortemperatur von 500°C bis 600°C würde die irreversible Umwandlung der Silane daher hauptsächlich im Bereich des Sensors auftreten. Ein Silanfilter bei einer Messgastemperatur von 20°C bis 300°C wäre relativ wirkungslos, da bei < 300°C die Silane fast ungehindert durch das Filter diffundieren. Die Installation eines extra beheizten Filters vor dem Sensor ist mit hohem zusätzlichem Aufwand verbunden. Vorteilhafterweise wird daher das Filter vom Sensor mitgeheizt.

Bevorzugt wird die Sensorheizungstemperatur so weit wie möglich abgesenkt, sodass die prinzipielle Sensor- und Filterfunktion noch gegeben ist, die Abscheidungsrate des Schadgases und insbesondere die Silan-Abscheidungsrate aber minimiert wird.

Bevorzugt ist das Feinfilter als porös gesintertes Keramiksubstrat, insbesondere aus Yttrium-stabilisiertem ZrO₂, ausgebildet.

Gemäß einer weiteren, besonders bevorzugten Ausführungsform der vorliegenden Erfindung weist das Feinfilter eine Porengröße von weniger als 1 *µ*m auf.

Ein feinporiger Feinfilter mit < 1 *µ*m Porenöffnung, insbesondere bei einer Filterdicke von etwa 0,15 mm, bewirkt einen ausreichend Schutz des Festkörperelektrolytelements vor Schadgasen, die feinen Porenöffnungen führen aber ihrerseits zu einer schnellen Verglasung des Feinfilters, insbesondere bei Anwesenheit von Silanen als Schadgasen. Feinfilter sind also insbesondere geeignet, um vor geringen Silanbelastungen zu schützen, z.B. für Anwendungen bei denen das Dichtungsmaterial nicht oder nur sehr selten gewechselt wird. Die siliziumhaltigen Verbindungen des Dichtungsmaterials dampfen bei höheren Messgastemperaturen aus, die Silanbelastung nimmt mit fortlaufendem Betrieb schnell ab.

Anwendungen bei denen das Dichtungsmaterial regelmäßig gewechselt wird, führen zu wesentlich höheren Silanbelastungen und benötigen daher ein weiter verbessertes Filterdesign. Bevorzugt handelt es sich daher bei dem Grobfilter zur Abtrennung von Schadgasen aus dem Messgas um einen Grobfilter zur Abtrennung von Silanen aus dem Messgas. Das Grobfilter weist mindestens eine Diffusionsöffnung auf, deren Durchmesser so gewählt wird, dass es bei der zu erwarteten Silanbelastung über die Lebensdauer des Gassensorelementes zu keinem kompletten Verglasen der Diffusionsöffnung kommt.

Die Diffusionsöffnung des Grobfilters ist bevorzugt trichterförmig, d.h. der Durchmesser direkt an der Messumgebung ist größer als an der Filterinnenseite. Damit wird die Tatsache kompensiert, dass die Verglasungswahrscheinlichkeit direkt an der Messumgebung am größten ist, und zudem ein vorzeitiges Verglasen der Filterstruktur an dieser stark exponierten Stelle verhindert. Der Durchmesser der Diffusionsöffnung ist bevorzugt so dimensioniert, dass es bei der zu erwartenden Belastung über die Lebensdauer des Gassensorelements zu keinem Zuwachsen der Diffusionsöffnung kommt. Die Durchlässigkeit sollte bei Erreichen der maximalen Lebensdauer mindestens 50% der ursprünglichen Durchlässigkeit betragen.

Grundsätzlich wird durch die relativ klein dimensionierte Diffusionsöffnung erreicht, dass der Gasaustausch reduziert wird. Bevorzugt wird der Gasaustausch und damit das Sensoransprechen soweit reduziert, wie dies die Anwendung erlaubt, da bei geringerem Gasaustausch die Filter langsamer verglasen. Die Filterwirkung beruht sowohl auf dem direkten Einfangen von Schadgaspartikeln als auch auf der Begrenzung des Gasaustausches, sodass weniger Schadgas in den Sensor nachströmt.

Besonders bevorzugt sind das Grobfilter, das Feinfilter, das Festkörperelektrolytelement und das Keramiksubstrat des Heizelements zylinderförmig ausgebildet und in einer Sandwichstruktur übereinander angeordnet.

Gemäß einer weiteren bevorzugten Ausführungsform ist das Heizelement gasdicht von der Umgebung getrennt angeordnet. Das Gassensorelement wird dadurch um einen Schutz der Sensorheizung ergänzt. Schadgase können die Eigenschaften der Sensorheizung negativ beeinflussen. Eine Beeinträchtigung des Messsystems kann sich bereits durch eine geringfügige Änderung des Heizungswiderstandes ergeben, da über diesen auch die Sensortemperatur geregelt werden kann. Im Betrieb kann eine veränderte Sensortemperatur zur Veränderung der Sensorkennlinie führen und somit die Messgenauigkeit des Systems herabsetzten. An der Sensorheizung muss kein Gasaustausch stattfinden, daher ist es möglich die Heizung mit Hilfe einer dicht gesinterten Keramikscheibe von der Umgebung hermetisch abzutrennen.

Bevorzugt handelt es sich bei den Verbindungselementen um Glasringe. Da Glas einen ähnlichen thermischen Ausdehnungskoeffizienten besitzt wie die keramischen Bestandteile des Gassensorelements, werden durch Temperaturänderungen bedingte Spannungen zwischen den einzelnen Bestandteilen vermieden.

Bevorzugt erfolgt die gasdichte Abtrennung des Heizelements von der Umgebung durch ein dicht gesintertes Keramikabdeckelement, wobei das Keramiksubstrat des Heizelements und das Keramikabdeckelement durch ein Verbindungselement, insbesondere durch einen Glasring, miteinander verbunden sind.

Bevorzugt weisen das Keramiksubstrat des Heizelements, das Festkörperelektrolytelement, das Feinfilter, das Grobfilter und die Verbindungselemente einen ähnlichen, bevorzugt einen identischen thermischen Ausdehnungskoeffizienten auf. Da auch die als Verbindungselemente eingesetzten Glasringe einen ähnlichen thermischen Ausdehnungskoeffizienten aufweisen, werden durch Temperaturänderungen bedingte Spannungen zwischen den einzelnen Bestandteilen des Gassensorelements vermieden.

Grundsätzlich wird sich die Porosität des Feinfilters wie auch des Grobfilters durch das Sinterprofil bestimmt und lässt sich im Laufe der Herstellung so über mehrere Größenordnungen variieren.

Die vorliegende Erfindung umfasst auch die Verwendung eines der oben beschriebenen Gassensorelemente zur Messung des Sauerstoffpartialdruckes oder des Sauerstoffgehalts in einem Messgas.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: einen vertikalen Querschnitt durch eine Ausführungsform eines Gassensorelements gemäß der vorliegenden Erfindung;
- Fig. 2: einen vertikalen Querschnitt durch eine weitere Ausführungsform eines Gassensorelements gemäß der vorliegenden Erfindung;
- Fig. 3: einen vertikalen Querschnitt durch eine weitere Ausführungsform eines Gassensorelements gemäß der vorliegenden Erfindung;
- Fig. 4: einen vertikalen Querschnitt durch eine weitere Ausführungsform eines Gassensorelements gemäß der vorliegenden Erfindung.

### Wege zur Ausführung der Erfindung

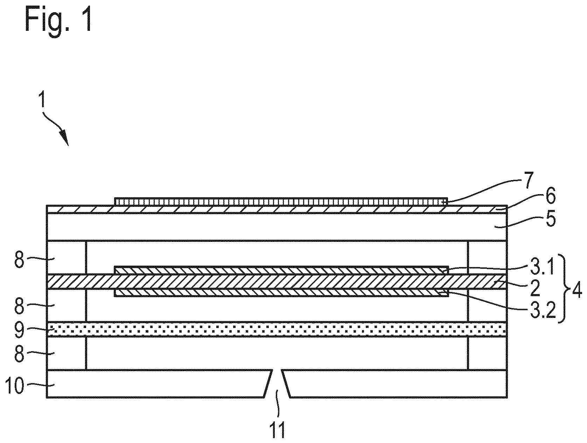

Fig. 1 zeigt einen vertikalen Querschnitt durch eine Ausführungsform eines Gassensorelements 1 gemäß der vorliegenden Erfindung. Das Gassensorelement 1, das zur Bestimmung des Sauerstoffgehaltes eines Messgases dient, weist eine Festkörperelektrolytzelle 4 mit einem sauerstoffleitenden Festkörperelektrolytelement 2 und zwei an sich gegenüberliegenden Oberflächen des Festkörperelektrolytelementes 2 angeordnete Platin-Elektroden 3.1, 3.2 auf, nämlich eine Referenzelektrode 3.1 und eine Messelektrode 3.2. Bei der dargestellten Ausführungsform besteht das plattenartig ausgebildete Festkörperelektrolytelement 2 aus dicht gesintertem Yttrium-stabilisierten Zirconiumdioxid.

Die Referenzelektrode 3.1 befindet sich in einer ein Referenzvolumen aufnehmenden Referenzkammer, wobei zumindest ein Teil einer Wandung der Referenzkammer durch ein ein Keramiksubstrat 5 aufweisendes Heizelement gebildet ist. Die wenigstens eine Messelektrode 3.2 ist in einer das Messgas enthaltenden Messkammer angeordnet, wobei eine Wandung der Messkammer in Form eines Feinfilters 9 zur Abtrennung von Schadgasen aus dem Messgas ausgebildet ist und die Messkammer ansonsten gasdicht gegen die Umgebung abgeschlossen ist. Das Feinfilter besteht aus einem porös gesinterten Yttrium-stabilisierten Zirconiumdioxid und weist eine Porengröße <1*µ*m auf.

Zum Erhitzen des Festkörperelektrolytelements 2 auf eine konstante oder im Wesentliche konstante Betriebstemperatur dient eine elektrische Heizung 7, die ausreichend nahe an dem Festkörperelektrolytelement 2 angeordnet ist. Bei der dargestellten Ausführungsform wird eine gedruckte Platin-Heizung eingesetzt, die an der mit der Referenzkammer nicht in Kontakt stehenden Oberfläche des dicht gesinterten Keramiksubstrats 5 des Heizelements auf einer dort als oberflächliche Passivierung aufgebrachten Glasschicht 6 angeordnet ist. Die Kontaktierung der Pt-Heizung kann mittels Pt-Drähten erfolgen. Als Keramiksubstrat 5 des Heizelements wird Yttrium-stabilisiertes Zirconiumdioxid eingesetzt.

Ein mit einer Diffusionsöffnung 11 ausgestatteter Grobfilter 10 zur Abtrennung von Schadgasen aus dem Messgas bildet zusammen mit dem Feinfilter 9 eine ansonsten gasdicht gegen die Umgebung abgeschlossene Vorkammer. Die Diffusionsöffnung 11 ist trichterförmig ausgebildet, wobei sich der Durchmesser der Diffusionsöffnung 11 in Richtung zur schützenden Sensorelektrode hin verjüngt. Dadurch wird vermieden, dass sich die Diffusionsöffnung 11 an dem besonders exponierten Übergang zur äußeren Messumgebung vorzeitig verschließt.

Das Grobfilter besteht aus einem porös gesinterten Yttrium-stabilisierten Zirconiumdioxid und weist eine Porengröße > 10*µ*m auf. Durch eine Porengröße > 10 *µ*m wird erreicht, dass die Durchlässigkeit der Diffusionsöffnung 11 bei der maximal zu erwartenden Schadgasbelastung über die gesamte Lebensdauer des Gassensorelements nur auf etwa 50% abnimmt.

Die Keramikelemente Feinfilter 9, Festkörperelektrolytelement 2, Keramiksubstrat 5 des Heizelements und Grobfilter 10 sind in Form einer Sandwichstruktur übereinander angeordnet und durch Verbindungselemente 8 miteinander verbunden. Die mechanische Verbindung der Keramikelemente 9, 2, 5, 10 erfolgt durch Verschmelzen mittels Schmelzpreforms, die als Glasringe ausgeführt sind, welche somit als Verbindungselemente 8 dienen. Durch die Glasringe 8 wird eine hermetisch abgedichtete O₂-Referenzkammer zwischen Heizung und Festkörperelektrolytzelle 4 bereitgestellt. Glasringe 8 dienen auch als Verbindungselemente zum Feinfilter 9 und als Verbindungselement zum Grobfilter 10. Die Verschmelzung mittels Glasringen führt prinzipiell zu einer hermetisch dichten Verbindung der einzelnen Elemente, ein Gasaustauch kann dann nur mehr über die porös ausgeführten oder mit einer Diffusionsöffnung versehenen Keramikelemente erfolgen.

Die Keramikelemente Feinfilter 9, Festkörperelektrolytelement 2, Keramiksubstrat 5 des Heizelements und Grobfilter 10 sind alle als gesinterte Keramikscheiben ausgeführt und bestehen alle aus einem einheitlichen Keramiksubstratmaterial, wodurch sich ein einheitlicher thermischer Ausdehnungskoeffizient ergibt. Da auch die als Verbindungselemente eingesetzten Glasringe 8 einen ähnlichen thermischen Ausdehnungskoeffizienten aufweisen, werden durch Temperaturänderungen bedingte Spannungen zwischen den einzelnen Bestandteilen des Gassensorelements vermieden.

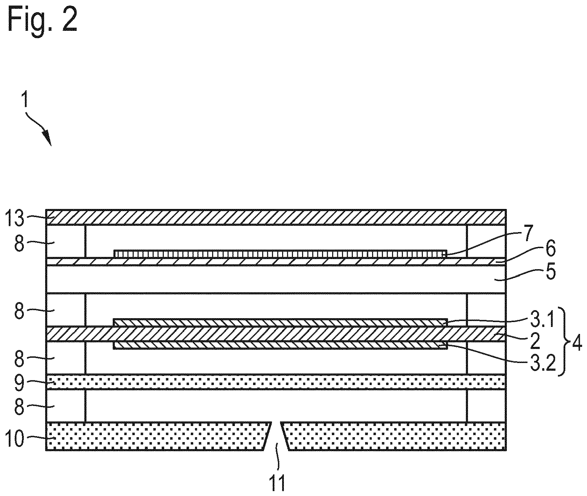

Die Fig. 2 zeigt einen vertikalen Querschnitt durch eine weitere Ausführungsform eines Gassensorelements 1 gemäß der vorliegenden Erfindung. Das Gassensorelement 1 entspricht dem in Fig. 1 dargestellten Gassensorelement, weist aber zusätzlich ein dicht gesintertes Keramikabdeckelement 13 auf, das durch einen Glasring 8 mit Keramiksubstrat 5 des Heizelements verbunden ist. Durch den Glasring 8 und das Keramikabdeckelement 13 wird eine gasdichte Abtrennung des Heizelements von der Umgebung erreicht. Auf diese Weise wird ein Schutz der Sensorheizung gewährleistet und Schadgase können die Eigenschaften der Sensorheizung nicht negativ beeinflussen.

Eine Beeinträchtigung des Messsystems kann sich bereits durch eine geringfügige Änderung des Heizungswiderstandes ergeben, da über diesen auch die Sensortemperatur geregelt werden kann. Im Betrieb kann eine veränderte Sensortemperatur zur Veränderung der Sensorkennlinie führen und somit die Messgenauigkeit des Systems herabsetzten. An der Sensorheizung muss kein Gasaustausch stattfinden, daher ist es möglich die Heizung mit Hilfe einer dicht gesinterten Keramikscheibe von der Umgebung hermetisch abzutrennen.

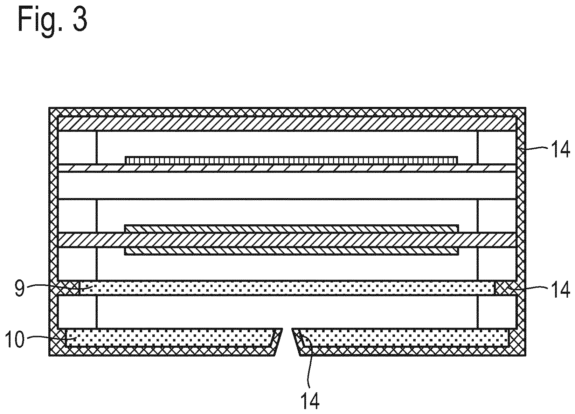

Das Grobfilter 10 ist in dem gezeigten Ausführungsbeispiel durch eine porös gesinterte Keramik mit Diffusionsöffnung gebildet. Die Ansprechzeit eines Sensors der noch keiner Schadgasbelastung ausgesetzt war, ist in diesem Fall deutlich schneller. Mit fortschreitender Schadgasbelastung verschlechtert sich das Ansprechverhalten. Die poröse Oberfläche des Grobfilters an der Messumgebung verglast zunehmend, bis das Grobfilter 10 effektiv einer dichten Keramik mit Diffusionsöffnung entspricht wie sie in der Fig. 1 gezeigt ist. Dabei muss selbstverständlich die Porengröße der Diffusionsöffnung größer sein als die Porengröße der porösen Struktur der Keramik. Die Fig. 3 zeigt die Ausführungsform der Fig. 2 nach einer länger andauernden Schadgasbelastung, die zu einer starken Verglasung 14 in den Außenbereichen des Gassensorelements führt. Die poröse Oberfläche des Grobfilters 10 entspricht nun einer dichten Keramik mit Diffusionsöffnung. Die poröse Struktur des Feinfilters 9 ist vom direkten Kontakt mit der Messumgebung geschützt, nur über die Mantelfläche der Feinfilterscheibe ergibt sich ein Gasaustausch mit der Messumgebung. Dies ist unproblematisch, da bei Silanbelastung zwar diese Mantelfläche schnell verglast, die weiter innenliegenden porösen Filterstrukturen aber kaum beeinträchtigt werden.

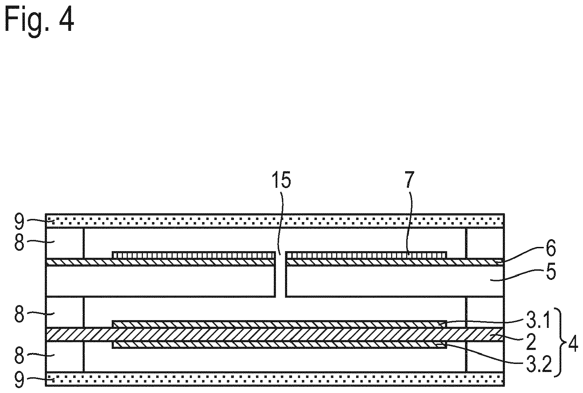

Die Fig. 4 zeigt einen vertikalen Querschnitt durch eine weitere Ausführungsform eines Gassensorelements gemäß der vorliegenden Erfindung. Das Gassensorelement entspricht in weiten Teilen dem in Fig. 1 dargestellten Gassensorelement, arbeitet aber im gezeigten Ausführungsbeispiel auf amperometrischer Basis. Die Referenzelektrode 3.1 steht über einen Diffusionskanal 15 mit der Messumgebung in Verbindung. In diesem Fall ist also die Referenzkammer nicht gasdicht gegen die Umgebung abgeschlossenen, sondern steht mit dieser in Verbindung. Dazu ist die Wandung der Referenzkammer, die durch das ein Keramiksubstrat 5 aufweisende Heizelement gebildet ist, zweiteilig ausgebildet, wobei zwischen den beiden Wandungsteilen der angesprochene Diffusionskanal 15 ausgebildet ist. Der Diffusionskanal 15 ermöglicht den für das amperometrische Messprinzip erforderlichen stetigen Gasfluss durch die Sensorstruktur und führt somit auch zu einem forcierten Nachströmen von Schadgasen. Um die Resistenz gegenüber diesen Schadgasen zu erhöhen, ist ein zusätzlicher Feinfilter 9 mit einer Porengröße < 1*µ*m vorgesehen. Das Feinfilter 9 ist benachbart und oberhalb der mit der Referenzkammer nicht in Kontakt stehenden Oberfläche des Keramiksubstrats 5 des Heizelements angeordnet und durch einen Glasring 8 mit diesem verbunden. Das auf amperometrischer Basis arbeitende Gassensorelement weist also in der Sensor-Sandwichstruktur zwei Feinfilter 9 auf, die an den gegenüberliegenden Seiten der Festkörperelektrolytzelle vorgesehen ist, sodass beide Elektroden 3.1, 3.2 vor Schadgasen geschützt werden.

### Bezugszeichenliste

- 1: Gassensorelement
- 2: Festkörperelektrolytelement
- 3.1: Referenzelektrode
- 3.2: Messelektrode
- 4: Festkörperelektrolytzelle
- 5: Keramiksubstrat
- 6: Glasschicht
- 7: Platin-Heizung
- 8: Verbindungselement
- 9: Feinfilter
- 10: Grobfilter
- 11: Diffusionsöffnung
- 13: Keramikabdeckelement
- 14: verglaste Außenbereiche
- 15: Diffusionskanal

## Patentansprüche

1. Gassensorelement aufweisend eine Festkörperelektrolytzelle (4) mit wenigstens einem Festkörperelektrolytelement (2) und wenigstens zwei an sich gegenüberliegenden Oberflächen des Festkörperelektrolytelementes (2) angeordneten Elektroden (3.1, 3.2), nämlich wenigstens einer Referenzelektrode (3.1) und wenigstens einer Messelektrode (3.2), wobei die wenigstens eine Referenzelektrode (3.1) in einer Referenzkammer angeordnet ist, wobei zumindest ein Teil einer Wandung der Referenzkammer durch ein ein Keramiksubstrat (5) aufweisendes Heizelement gebildet ist, wobei die wenigstens eine Messelektrode (3.2) in einer das Messgas enthaltenden Messkammer angeordnet ist, wobei zumindest ein Teil einer Wandung der Messkammer in Form eines Feinfilters (9) zur Abtrennung von Schadgasen aus dem Messgas ausgebildet ist und die Messkammer ansonsten gasdicht gegen die Umgebung abgeschlossen ist, wobei das Feinfilter (9), das Festkörperelektrolytelement (2) und das Keramiksubstrat (5) des Heizelements in Form einer Sandwichstruktur übereinander angeordnet und durch Verbindungselemente (8), insbesondere durch Glasringe, miteinander verbunden sind, **dadurch gekennzeichnet, dass** zumindest ein mit zumindest einer Diffusionsöffnung (11) ausgestatteter Grobfilter (10) zur Abtrennung von Schadgasen aus dem Messgas vorgesehen ist, wobei die Diffusionsöffnung (11) einen Durchmesser von mindestens 10 µm aufweist.

2. Gassensorelement nach Anspruch 1, **dadurch gekennzeichnet, dass** die wenigstens eine Referenzelektrode (3.1) in einer mit Referenzgas, insbesondere mit Sauerstoff gefüllten, gegen die Umgebung gasdicht abgeschlossenen Referenzkammer angeordnet ist.

3. Gassensorelement nach einem der Ansprüche 1 oder 2, **dadurch gekennzeichnet, dass** das Grobfilter (10) zusammen mit dem Feinfilter (9) bevorzugt eine ansonsten gasdicht gegen die Umgebung abgeschlossene Vorkammer bildet.

4. Gassensorelement nach einem der Ansprüche 1 bis 3, **dadurch gekennzeichnet, dass** das Festkörperelektrolytelement (2) aus einem Sauerstoff leitenden Festkörperelektrolyten, insbesondere aus Yttrium-stabilisiertem ZrO₂, gebildet ist.

5. Gassensorelement nach einem der Ansprüche 1 bis 4, **dadurch gekennzeichnet, dass** eine mit der Referenzkammer nicht in Kontakt stehende Oberfläche des Keramiksubstrats (5) des Heizelements mit einer Glasschicht (6) versehen ist und zumindest eine gedruckte Platin-Heizung (7) auf der Glasschicht (6) angeordnet ist.

6. Gassensorelement nach einem der Ansprüche 1 bis 5, **dadurch gekennzeichnet, dass** das Keramiksubstrat (5) des Heizelements aus Yttrium-stabilisiertem ZrO₂ gebildet ist und/oder das Feinfilter (9) als porös gesintertes Keramiksubstrat, insbesondere aus Yttrium-stabilisiertem ZrO₂ ausgebildet ist und/oder das Grobfilter (10) als dicht gesintertes oder als porös gesintertes Keramiksubstrat, insbesondere aus Yttrium-stabilisiertem ZrO₂, ausgebildet ist.

7. Gassensorelement nach einem der Ansprüche 1 bis 6, **dadurch gekennzeichnet, dass** das Feinfilter (9) eine Porengröße von weniger als 1 µm aufweist.

8. Gassensorelement nach einem der Ansprüche 1 bis 7, **dadurch gekennzeichnet, dass** es sich bei wenigstens einer Referenzelektrode (3.1) und/oder wenigstens einer Messelektrode (3.2) um Platin-Elektroden handelt.

9. Gassensorelement nach einem der Ansprüche 3 bis 8, **dadurch gekennzeichnet, dass** die Diffusionsöffnung (11) eine sich in Richtung der Vorkammer konisch verjüngende Form aufweist, wobei der Durchmesser der Diffusionsöffnung (11) in dem der Vorkammer benachbarten Bereich mindestens 10 µm beträgt.

10. Gassensorelement nach einem der Ansprüche 1 bis 9, **dadurch gekennzeichnet, dass** es sich bei dem Feinfilter (9) zur Abtrennung von Schadgasen aus dem Messgas und/oder dem Grobfilter (10) zur Abtrennung von Schadgasen aus dem Messgas um einen Feinfilter (9) zur Abtrennung von Silanen aus dem Messgas und/oder um einen Grobfilter (10) zur Abtrennung von Silanen aus dem Messgas handelt.

11. Gassensorelement nach einem der Ansprüche 1 bis 10, **dadurch gekennzeichnet, dass** das Grobfilter (10), das Feinfilter (9), das Festkörperelektrolytelement (2) und das Keramiksubstrat (5) des Heizelements zylinderförmig ausgebildet und in einer Sandwichstruktur übereinander angeordnet sind.

12. Gassensorelement nach einem der Ansprüche 1 bis 11, **dadurch gekennzeichnet, dass** das Heizelement gasdicht von der Umgebung getrennt angeordnet ist, wobei die gasdichte Abtrennung des Heizelements von der Umgebung insbesondere durch ein dicht gesintertes Keramikabdeckelement (13) erfolgt, wobei das Keramiksubstrat (5) des Heizelements und das Keramikabdeckelement (13) durch ein Verbindungselement (8) miteinander verbunden sind.

13. Gassensorelement nach einem der Ansprüche 1 bis 12, **dadurch gekennzeichnet, dass** das Keramiksubstrat (5) des Heizelements, das Festkörperelektrolytelement (2), das Feinfilter (9), das Grobfilter (10) und die Verbindungselemente (8) einen ähnlichen, bevorzugt einen identischen thermischen Ausdehnungskoeffizienten aufweisen.

14. Verwendung eines Gassensorelements nach einem der Ansprüche 1 bis 13 zur Messung des Sauerstoffpartialdruckes oder des Sauerstoffgehalts in einem Messgas.

## Claims

1. A gas sensor element comprising a solid electrolyte cell (4) having at least one solid electrolyte element (2) and at least two electrodes (3.1, 3.2) arranged on opposite surfaces of the solid electrolyte element (2), namely at least one reference electrode (3.1) and at least one measurement electrode (3.2), wherein the at least one reference electrode (3.1) is arranged in a reference chamber, wherein at least a portion of a wall of the reference chamber is formed by a heating element comprising a ceramic substrate (5), wherein the at least one measurement electrode (3.2) is arranged in a measurement chamber containing the sample gas, wherein at least a portion of a wall of the measurement chamber is configured in the form of a fine filter (9) for the separation of polluting gases from the sample gas and the measurement chamber is otherwise sealed off in a gastight manner from the surroundings, wherein the fine filter (9), the solid electrolyte element (2) and the ceramic substrate (5) of the heating element are arranged one above the other in the form of a sandwich structure and connected to one another via connecting elements (8), in particular via glass rings, **characterized in that** at least one coarse filter (10) fitted with at least one diffusion opening (11) is provided for the separation of pollutant gases from the sample gas, wherein the diffusion opening (11) has a diameter of at least 10 µm.

2. Gas sensor element according to claim 1, **characterized in that** the at least one reference electrode (3.1) is arranged in a reference chamber which is filled with reference gas, in particular with oxygen, which is sealed off from the surroundings in a gastight manner.

3. Gas sensor element according to claim 1 or 2, **characterized in that** the coarse filter (10) together with the fine filter (9) preferably form a pre-chamber which is otherwise sealed off from the surroundings in a gastight manner.

4. Gas sensor element according to one of claims 1 to 3, **characterized in that** the solid electrolyte element (2) is produced from an oxygen-conducting solid electrolyte, in particular from yttrium-stabilized ZrO₂.

5. Gas sensor element according to one of claims 1 to 4, **characterized in that** a surface of the ceramic substrate (5) of the heating element which is not in contact with the reference chamber is provided with a glass layer (6) and that at least one printed platinum heater (7) is arranged on the glass layer (6).

6. Gas sensor element according to one of claims 1 to 5, **characterized in that** the ceramic substrate (5) of the heating element is formed from yttrium-stabilized ZrO₂ and/or the fine filter (9) is configured as a porous sintered ceramic substrate, in particular produced from yttrium-stabilized ZrO₂ and/or the coarse filter (10) is configured as a densely sintered or as a porous sintered ceramic substrate, in particular produced from yttrium-stabilized ZrO₂.

7. Gas sensor element according to one of claims 1 to 6, **characterized in that** the fine filter (9) has a pore size of less than 1 µm.

8. Gas sensor element according to one of claims 1 to 7, **characterized in that** the at least one reference electrode (3.1) and/or at least one measurement electrode (3.2) are platinum electrodes.

9. Gas sensor element according to one of claims 3 to 8, **characterized in that** the diffusion opening (11) has a shape which tapers conically in the direction of the pre-chamber, wherein the diameter of the diffusion opening (11) in the region adjacent to the pre-chamber is at least 10 µm.

10. Gas sensor element according to one of claims 1 to 9, **characterized in that** the fine filter (9) for the separation of pollutant gases from the sample gas and/or the coarse filter (10) for the separation of pollutant gases from the sample gas is a fine filter (9) for the separation of silanes from the sample gas and/or a coarse filter (10) for separation of silanes from the sample gas.

11. Gas sensor element according to one of claims 1 to 10, **characterized in that** the coarse filter (10), the fine filter (9), the solid electrolyte element (2) and the ceramic substrate (5) of the heating element are cylindrical in configuration and arranged one above the other in a sandwich structure.

12. Gas sensor element according to one of claims 1 to 11, **characterized in that** the heating element is arranged in a manner that is separated from the surroundings in a gastight manner, wherein the gastight separation of the heating element from the surroundings is accomplished by a densely sintered ceramic cover element (13), wherein the ceramic substrate (5) of the heating element and the ceramic cover element (13) are connected to one another via a connecting element (8).

13. Gas sensor element according to one of claims 1 to 12, **characterized in that** the ceramic substrate (5) of the heating element, the solid electrolyte element (2), the fine filter (9), the coarse filter (10) and the connecting elements (8) have a similar, preferably identical coefficient of thermal expansion.

14. Use of a gas sensor element as claimed in one of claims 1 to 13, for the measurement of the partial pressure of oxygen or of the oxygen content in a sample gas.

## Revendications

1. Elément de capteur de gaz, comportant une cellule à électrolyte solide (4) pourvue d'au moins un élément d'électrolyte solide (2) et d'au moins deux électrodes (3.1, 3.2), disposées sur des faces opposées de l'élément d'électrolyte solide (2), s'agissant d'au moins une électrode de référence (3.1) et d'au moins une électrode de mesure (3.2), l'au moins une électrode de référence (3.1) étant disposée dans une chambre de référence, au moins une partie d'une paroi de la chambre de référence étant réalisée par un élément chauffant qui comporte un substrat céramique (5), l'au moins une électrode de mesure (3.2) étant disposée dans une chambre de mesure contant le gaz à mesurer, au moins une partie d'une paroi de la chambre de mesure étant réalisée sous forme d'un filtre fin (9) destiné à séparer des gaz nocifs du gaz à mesurer, la chambre de mesure étant par ailleurs fermée vis-à-vis de son environnement de manière étanche aux gaz, le filtre fin (9), l'élément d'électrolyte solide (2) et le substrat céramique (5) de l'élément chauffant étant superposés de manière à former une structure sandwich tout en étant reliés les uns aux autres par des éléments de liaison (8), notamment par des anneaux en verre, **caractérisé en ce qu'**il est pourvu d'au moins un filtre grossier (10) qui est équipé d'au moins une ouverture de diffusion (11) et qui est destiné à séparer des gaz nocifs du gaz à mesurer, l'ouverture de diffusion (11) ayant un diamètre d'au moins 10 µm.

2. Elément de capteur de gaz selon la revendication 1, **caractérisé en ce que** l'au moins une électrode de référence (3.1) est disposée dans une chambre de référence qui est remplie d'un gaz de référence, notamment d'oxygène, tout en étant étanche aux gaz vis-à-vis de son environnement.

3. Elément de capteur de gaz selon l'une des revendications 1 ou 2, **caractérisé en ce que** le filtre grossier (10) forme préférentiellement, avec le filtre fin (9), une préchambre qui est par ailleurs fermée vis-à-vis de son environnement de manière étanche aux gaz.

4. Elément de capteur de gaz selon l'une des revendications 1 à 3, **caractérisé en ce que** l'élément d'électrolyte solide (2) est réalisé à partir d'un électrolyte solide conducteur d'oxygène, notamment à partir de ZrO₂ stabilisé à l'yttrium.

5. Elément de capteur de gaz selon l'une des revendications 1 à 4, **caractérisé en ce qu'**une surface du substrat céramique (5) de l'élément chauffant qui n'est pas en contact avec la chambre de référence est munie d'une couche de verre (6), et au moins un chauffage en platine (7), réalisé par impression, est disposé sur la couche de verre (6).

6. Elément de capteur de gaz selon l'une des revendications 1 à 5, **caractérisé en ce que** le substrat céramique (5) de l'élément chauffant est réalisé à partir de ZrO₂ stabilisé à l'yttrium et/ou le filtre fin (9) est réalisé comme un substrat céramique poreux fritté, notamment à partir de ZrO₂ stabilisé à l'yttrium, et/ou le filtre grossier (10) est réalisé comme un substrat céramique densément fritté ou poreux fritté, notamment à partir de ZrO₂ stabilisé à l'yttrium.

7. Elément de capteur de gaz selon l'une des revendications 1 à 6, **caractérisé en ce que** le filtre fin (9) présente une taille des pores inférieure à 1 µm.

8. Elément de capteur de gaz selon l'une des revendications 1 à 7, **caractérisé en ce qu'**au moins une des électrodes de référence (3.1) et/ou au moins une des électrodes de mesure (3.2) est une électrode de platine.

9. Elément de capteur de gaz selon l'une des revendications 3 à 8, **caractérisé en ce que** l'ouverture de diffusion (11) présente une forme conique s'amenuisant vers la préchambre, le diamètre de l'ouverture de diffusion (11) étant, dans la zone adjacente à la préchambre, au moins 10 µm.

10. Elément de capteur de gaz selon l'une des revendications 1 à 9, **caractérisé en ce que** le filtre fin (9) destiné à séparer des gaz nocifs du gaz à mesurer et/ou le filtre grossier (10) destiné à séparer des gaz nocifs du gaz à mesurer est un filtre fin (9) destiné à séparer des silanes du gaz à mesurer et/ou un filtre grossier (10) destiné à séparer des silanes du gaz à mesurer.

11. Elément de capteur de gaz selon l'une des revendications 1 à 10, **caractérisé en ce que** le filtre grossier (10), le filtre fin (9), l'élément d'électrolyte solide (2) et le substrat céramique (5) de l'élément chauffant sont réalisés en forme de cylindre tout en étant superposés de manière à former une structure sandwich.

12. Elément de capteur de gaz selon l'une des revendications 1 à 11, **caractérisé en ce que** l'élément chauffant se trouve en disposition séparée de son environnement de manière étanche aux gaz, la séparation étanche aux gaz entre ledit élément chauffant et son environnement étant notamment réalisée par un élément de couverture en céramique (13) densément fritté, le substrat céramique (5) de l'élément chauffant et l'élément de couverture en céramique (13) étant reliés l'un à l'autre par un élément de liaison (8).

13. Elément de capteur de gaz selon l'une des revendications 1 à 12, **caractérisé en ce que** le substrat céramique (5) de l'élément chauffant, l'élément d'électrolyte solide (2), le filtre fin (9), le filtre grossier (10) et l'élément de liaison (8) présentent un coefficient de dilatation thermique semblable, de préférence identique.

14. Utilisation d'un élément de capteur de gaz selon l'une des revendications 1 à 13 pour mesurer la pression partielle d'oxygène ou la teneur en oxygène au sein d'un gaz à mesurer.
